# FASCICULE DE BREVET EUROPEEN

(11) **EP 4 124 701 B1**
(45) Date de publication et mention de la délivrance du brevet: **27.11.2024**
(21) Numéro de dépôt: 22186322.8
(22) Date de dépôt: 21.07.2022
(51) Int. Cl.: E04F 21/08, B65G 53/52, E04F 21/12, B65G 53/14

(54) **TUYAU D'UNE MACHINE DE SOUFFLAGE, MACHINE DE SOUFFLAGE ET PROCÉDÉ D'ISOLATION**
SCHLAUCH EINER BLASMASCHINE, BLASMASCHINE UND VERFAHREN ZUR ISOLIERUNG
PIPE FOR A BLOWING MACHINE, BLOWING MACHINE AND METHOD OF INSULATION

(30) Priorité: 26.07.2021 FR 2108067
(43) Date de publication de la demande: 01.02.2023
(73) Titulaire: SAINT-GOBAIN ISOVER, 92400 Courbevoie (FR)
(72) Inventeur: LUIS, David, 60290 Rantigny (FR)
(74) Mandataire: Ex Materia

(56) Documents cités:
- DE-U1- 202020 102 223
- FR-A1- 2 829 044
- US-A- 5 921 055

## Description

La présente invention concerne une machine de soufflage pour un produit isolant en vrac, tel que de la laine de verre, laine de roche, ouate de cellulose, fibres de coton ou tous autres matériaux similaires, la machine de soufflage comprenant un tuyau de projection dudit produit isolant en vrac.

Il est courant d'utiliser des produits isolants en vrac afin d'isoler une habitation, et plus particulièrement pour isoler des combles d'une telle habitation. L'utilisation d'une machine de soufflage permet alors de faciliter la projection du produit isolant dans l'habitation, en soufflant le produit isolant à partir d'air sous pression et à haut débit. De manière plus précise, le produit isolant est projeté au moyen du tuyau, fluidiquement relié à une base de la machine de soufflage au sein de laquelle est mélangé l'air et ledit produit isolant en vrac. La pression et le débit de l'air dans le tuyau doivent alors être suffisamment importants pour pouvoir transporter le produit isolant depuis la base de la machine de soufflage jusqu'à une sortie du tuyau.

Ce besoin d'une pression d'air importante pour réaliser la projection de produit isolant doit toutefois être pondéré par les inconvénients qu'une projection de produits isolants trop puissante peut générer, parmi lesquels, sans que cela soit exhaustif, le soulèvement de poussières lorsque le produit isolant en vrac est projeté dans des combles d'habitation et/ou le compactage trop important du produit isolant en vrac pouvant entraîner une isolation moins efficace.

La présente invention a donc pour but de palier aux inconvénients évoqués ci-dessus en proposant des moyens simples et applicables aux machines de soufflage existantes, permettant d'augmenter la maniabilité du tuyau ainsi que la précision de l'épandage du produit isolant en vrac dans la zone à isoler de l'habitation.

L'invention porte donc sur un tuyau de transport d'un produit d'isolation en vrac pour une machine de soufflage du produit isolant, le tuyau s'étendant suivant une direction d'allongement principal longitudinale et comprenant au moins une paroi cylindrique qui délimite un espace configuré pour la circulation au moins du produit isolant en vrac, la paroi cylindrique comprenant au moins une première portion d'extrémité et une deuxième portion d'extrémité opposées l'une de l'autre suivant la direction longitudinale, le tuyau étant caractérisé en ce que la paroi cylindrique comprend une pluralité de tronçons entre sa première portion d'extrémité et sa deuxième portion d'extrémité, au moins deux des tronçons comprenant chacun au moins un orifice d'évacuation de manière à former au moins deux tronçons percés, le tuyau comprenant au moins deux moyens d'obturation mobiles en translation suivant la direction longitudinale autour de la paroi cylindrique, chacun des moyens d'obturation étant apte à recouvrir spécifiquement un des tronçons percés.

La machine de soufflage peut être utilisée pour projeter le produit isolant en vrac, par exemple de la laine de verre, dans une zone à isoler d'une habitation, par exemple des combles. De manière plus précise, le tuyau de la machine de soufflage permet la pulvérisation d'un mélange fait de l'air sous pression et du produit isolant dans la zone à isoler, le mélange étant opéré dans une base de la machine de soufflage. De manière plus précise, l'air sous pression dans le tuyau permet de projeter le produit isolant en vrac depuis la première portion d'extrémité de la paroi cylindrique du tuyau jusqu'au moins la deuxième portion d'extrémité de la paroi cylindrique du tuyau formant respectivement l'entrée et la sortie du tuyau, en direction de la zone à isoler de l'habitation.

L'au moins un orifice d'évacuation de chacun des aux moins deux tronçons percés permet alors le passage d'air depuis l'intérieur du tuyau vers l'extérieur dudit tuyau afin de diminuer la pression et le débit d'air dans le tuyau et ainsi ajuster le débit de sortie du mélange sans pour autant modifier le débit d'air dans la base de la machine de soufflage. A cet effet, l'au moins un orifice d'évacuation de chacun des aux moins deux tronçons percés est configuré pour déboucher aussi bien sur l'intérieur du tuyau que sur l'extérieur du tuyau. Le fait de diminuer le débit de sortie permet notamment d'éviter le soulèvement de poussières pouvant être présentes dans la zone à isoler, et/ou d'éviter que le produit isolant en vrac projeté ne soit trop compacté dans l'isolant final, sous l'effet d'une pression trop importante de l'air projeté simultanément au produit isolant en vrac et l'invention permet d'obtenir ces avantages sans diminuer le débit d'air en entrée de la machine de soufflage, ce qui aurait pour effet de faire circuler le produit isolant en vrac au sein du tuyau avec une vitesse insuffisante pour une projection correcte en bout de tuyau.

Selon l'invention, chacun des moyens d'obturation est apte à recouvrir spécifiquement l'un des tronçons percés, ce qui signifie que chaque moyen d'obturation est associé à l'un des tronçons percés. Une position de dégagement d'un moyen d'obturation implique qu'il ne recouvre aucun des tronçons percés et une position de recouvrement de ce moyen d'obturation implique qu'il ne recouvre que le tronçon percé qui lui est associé. De la sorte, chaque moyen d'obturation n'a d'effet que sur le tronçon percé qui lui est associé pour moduler le passage d'air au travers des orifices d'évacuation, notamment en autorisant son passage ou en bloquant son passage au travers de l'orifice d'évacuation. La multiplicité des moyens d'obturation et le fait qu'ils soient spécifiquement associés à un tronçon percé permet à l'utilisateur du tuyau d'adapter finement le débit et la pression de l'air dans le tuyau et donc la puissance de projection du produit isolant en vrac, en recouvrant ou non l'intégralité des tronçons percés en fonction du nombre de moyens d'obturation déplacés.

Selon une caractéristique de l'invention, au moins deux des tronçons sont des tronçons de dégagement distincts des tronçons percés, chaque moyen d'obturation étant apte à prendre une position de recouvrement dans laquelle il est en regard d'un des tronçons percés et une position de dégagement dans laquelle il est en regard d'un des tronçons de dégagement.

On comprend que les tronçons de dégagement sont des tronçons ne comprenant pas d'orifice d'évacuation. Ainsi, lorsque les moyens d'obturation sont positionnés en recouvrement des tronçons de dégagement, l'air peut traverser les orifices d'évacuation formés sur les tronçons percés tandis que lorsque les moyens d'obturation sont positionnés en recouvrement des tronçons percés, lesdits moyens d'obturation bloquent le passage de l'air au travers desdits orifices d'évacuation.

Selon une caractéristique de l'invention, le moyen d'obturation et le tronçon percé associé sont configurés de sorte que le moyen d'obturation recouvre intégralement le tronçon percé dans la position de recouvrement. Pour chaque couple formé par un moyen d'obturation et son tronçon percé, le tronçon percé ne peut être que dans une position intégralement ouverte, sans être recouverte, ou dans une position intégralement fermée, entièrement recouverte par le moyen d'obturation.

Selon une alternative de l'invention, le moyen d'obturation peut être configuré pour prendre au moins une position intermédiaire entre la position intégralement ouverte et la position intégralement fermée. En d'autres termes, la position intermédiaire correspond à une position du moyen d'obturation dans laquelle ce dernier recouvre une partie seulement du tronçon percé. Il convient de comprendre que dans ce cas, la position intermédiaire est une position dans laquelle le moyen d'obturation peut s'arrêter pour recouvrir partiellement le tronçon percé correspondant, cette position intermédiaire pouvant être répétée de manière fiable à chaque utilisation le cas échéant.

Selon une caractéristique de l'invention, les au moins deux tronçons percés sont disposés l'un à la suite de l'autre suivant la direction longitudinale du tuyau, les au moins deux tronçons de dégagement étant disposés l'un à la suite de l'autre suivant la direction longitudinale du tuyau.

Selon une alternative de l'invention, les tronçons percés sont disposés en alternance avec les tronçons de dégagement, suivant la direction longitudinale du tuyau. En d'autres termes, l'un des tronçons percés est encadré par deux tronçons de dégagement suivant la direction longitudinale du tuyau, et/ou inversement.

Selon une caractéristique de l'invention, la pluralité de tronçons est formée sur un module de la paroi cylindrique qui est agencé entre la première portion d'extrémité et la deuxième portion d'extrémité de la paroi cylindrique du tuyau. Ce module peut être réalisé à part des deux portions d'extrémité puis rapporté et fixé de manière étanche à chacune des portions d'extrémité, ou bien être réalisé en un seul tenant avec au moins l'une de ces portions d'extrémité.

Selon une caractéristique de l'invention, le module comprend des organes de butée en translation des moyens d'obturation. De manière plus précise, les organes de butée assurent le blocage en translation longitudinale des moyens d'obturation autour du module et permettent d'assurer la position d'un moyen d'obturation en regard d'un tronçon percé pour qu'il prenne une position de recouvrement appropriée et/ou la position d'un moyen d'obturation en regard d'un tronçon de dégagement pour qu'il prenne une position de dégagement appropriée.

Selon une caractéristique de l'invention, un premier organe de butée est disposé à une première extrémité longitudinale du module en contact avec la première portion d'extrémité et un deuxième organe de butée est disposé à une deuxième extrémité longitudinale du module en contact de la deuxième portion d'extrémité.

Selon une caractéristique de l'invention, chaque ensemble formé par un des tronçons percés et un des tronçons de dégagement adjacents suivant la direction longitudinale est encadré longitudinalement par deux organes de butée. On comprend que lorsque les tronçons percés sont disposés en alternance avec les tronçons de dégagement, des organes de butée sont disposés de part et d'autre longitudinalement de chaque ensemble formé par un des tronçons de dégagement et un des tronçons percés afin d'assurer le blocage en translation longitudinale d'un des moyens d'obturation associé audit ensemble. Le cas échéant, un organe de butée peut être commun à deux ensembles voisins, avec une première face de l'organe de butée permettant le blocage en translation d'un moyen d'obturation du premier ensemble et une deuxième face de l'organe de butée permettant le blocage en translation d'un moyen d'obturation du deuxième ensemble. On permet ainsi de bloquer en position chacun des moyens d'obturation associé à chacun des ensembles formés par un des tronçons percés et un des tronçons de dégagement.

Selon une caractéristique de l'invention, les organes de butée sont des collets qui sont en saillie d'une surface externe du module. En d'autres termes, les organes de butée sous forme de collets entourent la surface externe du module.

Selon une caractéristique de l'invention, l'au moins un orifice d'évacuation de chacun des au moins deux tronçons percés est débouchant sur l'espace du tuyau et sur un environnement extérieur au dit tuyau.

Selon une caractéristique de l'invention, l'au moins un orifice d'évacuation de chacun des au moins deux tronçons percés présente une section de passage inférieure ou égale à 5mm.

On comprend qu'une telle dimension de la section de passage de l'orifice d'évacuation, par exemple le diamètre de l'orifice d'évacuation lorsque celui-ci présente une forme circulaire, permet de limiter le passage de produit isolant en vrac au travers dudit orifice d'évacuation, les fibres de produit isolant étant majoritairement d'une dimension supérieure à 5mm. Un tel dimensionnement de l'orifice d'évacuation forme alors un moyen de blocage du produit isolant, qui permet par ailleurs le passage de l'air sous pression vers l'extérieur du tuyau.

Selon une caractéristique de l'invention, un dispositif de filtration est disposé en recouvrement de chacun des au moins un orifice d'évacuation de chacun des au moins deux tronçons percés.

Le dispositif de filtration participe à limiter le passage de produit isolant au travers de chacun des orifices d'évacuation tout en autorisant le passage d'air à travers le tuyau. Un tel dispositif de filtration peut être disposé en recouvrement d'un orifice d'évacuation dont la section de passage est inférieure ou égale à 5mm afin de renforcer l'effet de blocage du passage de produit isolant au travers dudit orifice d'évacuation.

Selon une caractéristique de l'invention, les dispositifs de filtration sont des grilles comprenant une pluralité de trous de section inférieure ou égale à 5mm. De manière avantageuse, les dispositifs de filtration sont réalisés dans un matériau flexible de telle sorte que les grilles peuvent épouser la forme de la paroi cylindrique du tuyau.

Selon une caractéristique de l'invention, les dispositifs de filtration sont disposés dans l'espace délimité par la paroi cylindrique du tuyau. En d'autres termes, les dispositifs de filtration sont plaqués contre la face interne de la paroi cylindrique. Dans une telle disposition, les dispositifs de filtration ne bloquent pas le coulissement des moyens d'obturation le long de la paroi cylindrique du tuyau.

Selon un exemple de l'invention, le dispositif de filtration s'étend sur toute une dimension longitudinale du tuyau. En d'autres termes, le dispositif de filtration s'étend tout le long de la paroi cylindrique délimitant le tuyau et notamment tout le long de la face interne de la paroi cylindrique. Par ailleurs, le dispositif de filtration peut être disposé dans l'espace du tuyau de telle sorte que subsiste un espacement entre ledit dispositif de filtration et la paroi cylindrique, l'espacement pouvant présenter une dimension comprise entre 2mm et 4mm prise le long d'une droite perpendiculaire à la direction longitudinale du tuyau. On tire avantage d'une telle caractéristique du dispositif de filtration en ce qu'elle facilite l'insertion et le maintien de ce dernier dans l'espace du tuyau.

Selon une caractéristique de l'invention, l'au moins un orifice d'évacuation de chacun des tronçons percés s'étend dans la paroi cylindrique le long d'un axe d'allongement perpendiculaire à la direction longitudinale du tuyau.

En d'autres termes, les orifices d'évacuation sont des orifices droits, c'est-à-dire respectivement définis par une forme cylindrique autour d'un axe de révolution qui correspond ici à l'axe d'allongement desdits orifices d'évacuation et qui qui est sensiblement perpendiculaire à la direction de circulation de l'air et du produit isolant en vrac au sein du conduit délimité par la paroi cylindrique du tuyau.

Selon une alternative de l'invention, l'au moins un orifice d'évacuation de chacun des tronçons percés s'étend dans la paroi cylindrique le long d'un axe d'allongement incliné par rapport à la direction longitudinale du tuyau. Plus particulièrement, les orifices d'évacuation sont respectivement inclinés de telle sorte qu'ils s'étendent depuis l'intérieur vers l'extérieur du tuyau, en direction de la première portion d'extrémité.

En d'autres termes, dans cette alternative, les orifices d'évacuation sont inclinés dans la paroi cylindrique de sorte que l'air les traversant circule dans un sens sensiblement opposé au sens de circulation du mélange d'air et de produit isolant dans l'espace du tuyau, allant de la première portion d'extrémité vers la deuxième portion d'extrémité. Une telle inclinaison permet de limiter le passage du produit isolant en vrac au travers de l'orifice d'évacuation de chacun des tronçons percés.

Selon une caractéristique de l'invention, chacun des tronçons s'étend entre la première portion d'extrémité et la deuxième portion d'extrémité suivant une dimension d'extension prise le long de la direction longitudinale du tuyau, les dimensions d'extension de chacun des tronçons étant identiques les unes des autres et les moyens d'obturation présentant chacun une dimension longitudinale prise le long de la direction longitudinale du tuyau identique à chacune des dimensions d'extension des tronçons. On comprend qu'une telle caractéristique permet à chacun des moyens d'obturation de recouvrir l'intégralité de chacun des tronçons percés et/ou de chacun des tronçons de dégagement du module du tuyau.

Selon une caractéristique de l'invention, au moins un des moyens d'obturation est apte à former un organe de butée intermédiaire d'un autre moyen d'obturation adjacent longitudinalement.

Selon une caractéristique de l'invention, chacun des tronçons percés comprend une pluralité d'orifices d'évacuation dont la répartition sur la paroi cylindrique forme un motif, les motifs formés étant identiques d'un tronçon percé à l'autre.

Selon une alternative de l'invention, chacun des tronçons percés comprend une pluralité d'orifices d'évacuation dont la répartition sur la paroi cylindrique forme un motif, les motifs formés étant différents d'un tronçon percé à l'autre.

Selon une caractéristique de l'invention, la pluralité d'orifices d'évacuation de chacun des tronçons percés comprend au moins deux orifices d'évacuation présentant des sections de passage distinctes.

Selon une caractéristique de l'invention, le moyen d'obturation est un manchon coulissant longitudinalement autour de la paroi cylindrique du tuyau.

L'invention porte également sur une machine de soufflage d'un produit isolant en vrac comprenant au moins une base et un tuyau de transport du produit isolant suivant l'une quelconque des caractéristiques précédentes, la base comprenant au moins une entrée d'air et une entrée du produit isolant en vrac, lesdites entrées étant reliées au tuyau au moyen respectivement d'un canal de circulation d'air et d'un canal de circulation du produit isolant en vrac.

Selon une caractéristique de la machine de soufflage, un organe de contrôle du débit est disposé entre les canaux de circulation et le tuyau.

L'organe de contrôle du débit permet notamment d'ajuster le débit du mélange d'air et de produit isolant en amont de son entrée dans le tuyau par la première ouverture de ce dernier.

L'invention a également pour objet un procédé d'isolation d'une zone à isoler dans lequel un produit isolant en vrac est soufflé par une machine de soufflage tel que précédemment décrite, procédé au cours duquel un utilisateur est apte à déplacer en translation longitudinale au moins un des moyens d'obturation pour évacuer une quantité donnée d'air entre la base et la deuxième portion d'extrémité du tuyau.

D'autres caractéristiques, détails et avantages de l'invention ressortiront plus clairement à la lecture de la description donnée ci-après à titre indicatif en relation avec des dessins dans lesquels :
[Fig 1] est une vue schématique d'une machine de soufflage, comprenant au moins une base et un tuyau de transport d'un mélange d'air et de produit isolant en vrac, rendant notamment visible un orifice d'évacuation et un moyen d'obturation ;
[Fig 2] est une vue schématique d'un tuyau selon un premier mode de réalisation de l'invention, apte à équiper une machine de soufflage semblable à celle de la figure 1, comprenant au moins un tronçon percé d'orifices d'évacuation et au moins un moyen d'obturation ;
[Fig 3] est une vue en coupe longitudinale du tuyau de la figure 2 ;
[Fig 4] est une vue de détails en coupe rendant visible l'orientation d'un orifice d'évacuation selon un exemple de réalisation, et rendant par ailleurs visible un moyen de filtration apte à équiper le tuyau selon l'invention ;
[Fig 5] est une vue similaire à celle de la figure 4, avec un orifice d'évacuation orienté selon un exemple de réalisation alternatif ;
[Fig 6] est une vue en schématique du tuyau de la figure 2 dans laquelle un premier moyen d'obturation est disposé en recouvrement d'un premier tronçon percé, deux tronçons percés restant découverts ;
[Fig 7] est une vue similaire à celle de la figure 6, dans laquelle un deuxième moyen d'obturation est disposé en recouvrement d'un deuxième tronçon percé, de manière additionnelle au recouvrement du premier tronçon percé par le premier moyen d'obturation, un seul tronçon percé restant découvert ;
[Fig 8] est une vue similaire à celle des figures 6 et 7, dans laquelle un troisième moyen d'obturation est disposé en recouvrement d'un troisième tronçon percé, l'ensemble des tronçons percés étant alors recouverts ;
[Fig 9] est une vue schématique d'un tuyau selon un deuxième mode de réalisation de l'invention, apte à équiper une machine de soufflage semblable à celle de la figure 1, dans une configuration où l'ensemble des tronçons percés est découvert ;
[Fig 10] est une vue semblable à celle de la figure 9, dans une configuration où un des tronçons percés est recouvert par le moyen d'obturation qui lui est associé.

Il faut tout d'abord noter que si les figures exposent l'invention de manière détaillée pour sa mise en oeuvre, ces figures peuvent bien entendu servir à mieux définir l'invention, le cas échéant. Il est également à noter que ces figures n'exposent que des exemples de réalisation de l'invention. Enfin, les mêmes repères désignent les mêmes éléments dans l'ensemble des figures.

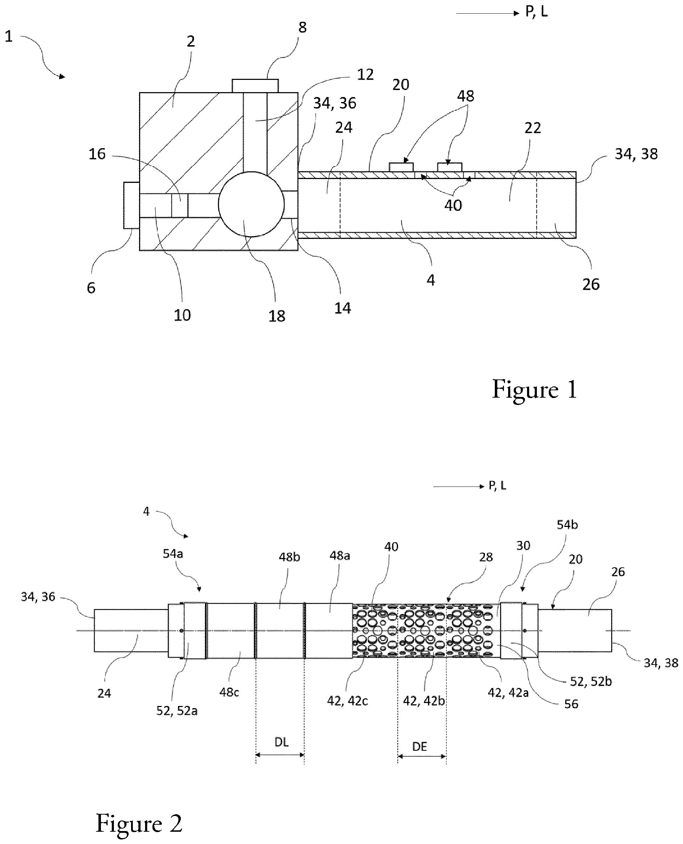

La figure 1 illustre une machine de soufflage 1 d'un produit isolant en vrac selon l'invention, comprenant au moins une base 2 et un tuyau 4 de transport du produit isolant. La base 2 comprend notamment au moins une entrée d'air 6 et une entrée de produit isolant 8 distinctes l'une de l'autre, l'entrée de produit isolant 8 étant reliée à un réservoir de produit isolant en vrac disposé à l'extérieur de la machine de soufflage 1 et non visible ici. Un canal de circulation d'air 10 et un canal de circulation du produit isolant 12 s'étendent chacun dans la base 2 de la machine de soufflage 1, respectivement depuis l'entrée d'air 6 et l'entrée de produit isolant 8 et sont reliés à une sortie 14 de la base 2 connectée au tuyau 4.

Afin de permettre la circulation de l'air à haut débit dans le canal de circulation d'air 10, ce dernier peut selon un exemple de l'invention comprendre un dispositif de ventilation 16 assurant la circulation de l'air depuis l'entrée d'air 6 et au moins jusqu'à la sortie 14 de la base 2. Ce dispositif de ventilation 16 est par ailleurs configuré et dimensionné pour pousser le mélange formé de l'air et du produit isolant, sous pression, au moins jusqu'à l'extrémité libre du tuyau 4, à l'opposé de la base, de telle sorte à faciliter la pulvérisation du mélange dans une zone à isoler de l'habitation.

Toujours selon l'exemple de l'invention de la figure 1, un organe de contrôle du débit 18 est disposé entre le canal de circulation d'air 10, le canal de circulation du produit isolant 12 et la sortie 14 de la base 2 et cet organe de contrôle du débit peut être configuré par l'utilisateur de telle sorte à mélanger l'air et le produit isolant dans des proportions données et adapter la qualité de l'isolation pouvant être obtenue par la projection du produit isolant en vrac dans le tuyau 4.

Le tuyau 4 selon l'invention s'étend suivant une direction d'allongement principal P, ici longitudinale L, et comprend au moins une paroi cylindrique 20 qui délimite un espace 22 configuré pour la circulation du mélange du produit isolant en vrac avec l'air. L'espace 22 s'étend entre une première portion d'extrémité 24 de la paroi cylindrique 20 et une deuxième portion d'extrémité 26 de la paroi cylindrique 20, opposées l'une de l'autre suivant la direction longitudinale L du tuyau 4. Tel que cela va être décrit plus en détails ci-après, au moins un orifice d'évacuation 40 est agencé dans la paroi cylindrique et un moyen d'obturation 48 associé est apte à venir recouvrir, le cas échéant, cet orifice d'évacuation 40.

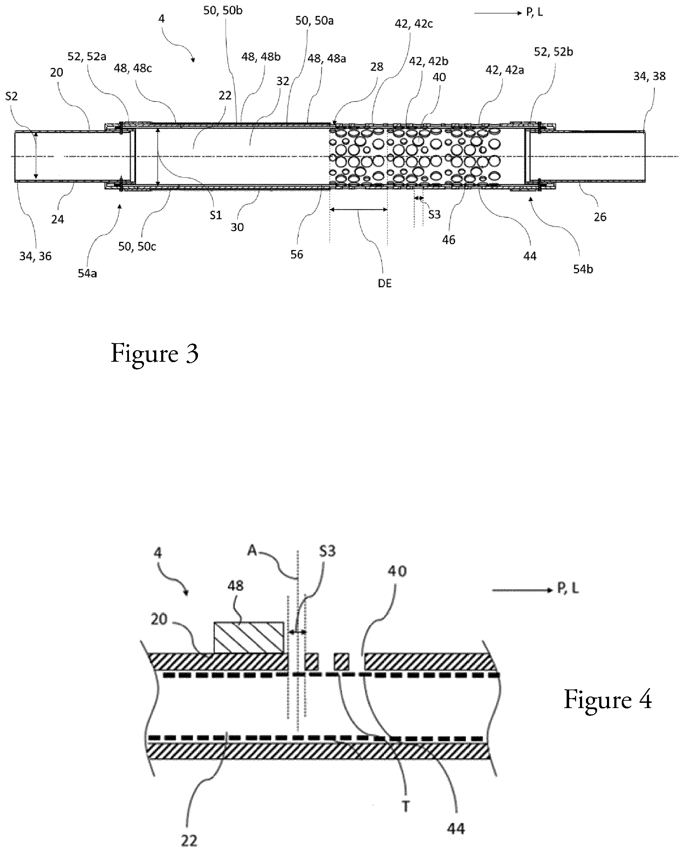

En se référant plus particulièrement aux figures 2 et 3, la paroi cylindrique 20 du tuyau 4 comprend par ailleurs une pluralité de tronçons 28 agencés les uns à suite des autres suivant la direction longitudinale L, entre la première portion d'extrémité 24 et la deuxième portion d'extrémité 26. De manière plus précise, la paroi cylindrique 20 comprend un module 30 sur lequel est formée la pluralité de tronçons 28 du tuyau 4, le module étant fixé d'une part sur la première portion d'extrémité 24 et d'autre part sur la deuxième portion d'extrémité 26.

Dans l'exemple illustré, notamment visible sur la figure 3, on définit une première section de passage S1 du module 30 et une deuxième section de passage S2 de la première portion d'extrémité 24 et de la deuxième portion d'extrémité 26, prises dans un plan perpendiculaire à la direction longitudinale L du tuyau 4, et la première section de passage S1 présente une valeur supérieure à celle de la deuxième section de passage S2. On comprend alors qu'une extrémité de chacune de la première portion d'extrémité 24 et de la deuxième portion d'extrémité 26 est emboitée dans un volume interne 32 du module 30, formant partie de l'espace 22 du tuyau 4, puis verrouillée sur le module, la jonction entre les portions d'extrémité 24, 26 et le module 30 étant étanche. Par ailleurs, on comprend que des extrémités libres 34 de chacune de la première portion d'extrémité 24 et de la deuxième portion d'extrémité 26 forment respectivement une entrée du tuyau 36 pour le mélange de produit isolant et d'air dans le tuyau 4 et une sortie du tuyau 38 pour le mélange de produit isolant et d'air du tuyau 4. L'entrée du tuyau 36 est ainsi raccordée fluidiquement à la sortie 14 de la base 2 de la machine de soufflage 1.

Selon les différents exemples illustrés de l'invention, le tuyau 4 comprend six tronçons 28 formés sur le module 30. On définit une dimension d'extension DE de chacun des tronçons 28, visible à la figure 3 et prise le long de la direction longitudinale L du tuyau 4, chacune des dimensions d'extension DE de chacun des tronçons 28 étant identiques les unes des autres. Il convient toutefois de noter que le nombre de tronçons peut être différent sans sortir du contexte de l'invention, dès lors que ce nombre permet de mettre en oeuvre ce qui va suivre, et que la dimension d'extension peut varier d'un tronçon à l'autre, dès lors que là encore la variation des dimensions d'extension permet de mettre en oeuvre ce qui va suivre.

Selon l'invention, au moins deux tronçons 28 du tuyau 4 comprennent chacun au moins un orifice d'évacuation 40 traversant, de telle sorte à former parmi la pluralité de tronçons au moins deux tronçons percés 42. On entend par traversant, le fait que l'au moins un orifice d'évacuation 40 de chacun des au moins deux tronçons 28 du tuyau 4 est débouchant dans l'espace 22 du tuyau 4 et à l'extérieur du tuyau 4, de manière à former un passage entre l'intérieur et l'extérieur du de la paroi cylindrique 20 du tuyau 4. Selon les exemples de l'invention qui vont suivre, on définit un premier tronçon percé 42a, un deuxième tronçon percé 42b et un troisième tronçon percé 42c, chacun comprenant au moins un orifice d'évacuation 40. Il convient alors de considérer que l'ensemble des caractéristiques décrites pour les trois tronçons percés 42a, 42b, 42c s'appliquent *mutatis mutandis* à deux tronçons percés 42 ou à plus de trois tronçons percés 42.

Par ailleurs, au moins deux moyens d'obturation 48 sont associés au module et sont mobiles le long de la direction longitudinale pour venir respectivement en recouvrement d'un des tronçons percés, lorsque cela est jugé nécessaire pour optimiser le débit du mélange formé par l'air et le produit isolant en vrac en sortie du tuyau de la machine de soufflage. Selon les exemples de l'invention qui vont suivre, on définit un premier moyen d'obturation 48a, un deuxième moyen d'obturation 48b et un troisième moyen d'obturation 48c, respectivement apte à venir recouvrir le premier tronçon percé 42a, le deuxième tronçon percé 42b et le troisième tronçon percé 42c. Là encore, il convient de noter que l'ensemble des caractéristiques décrites pour les trois moyens d'obturation 48 s'appliquent *mutatis mutandis* à deux moyens d'obturation 48 ou à plus de trois moyens d'obturation 48.

Chaque orifice d'évacuation 40, distinct des ouvertures formées à chaque extrémité longitudinale du tuyau, est formé au travers de la paroi cylindrique 20 du tuyau 4. De manière plus précise, l'orifice d'évacuation 40 forme un passage entre l'espace 22 interne au tuyau 4, où circule le mélange d'air et de produit isolant, et un environnement extérieur à la machine de soufflage 1. En d'autres termes, une partie du flux circulant au sein du tuyau est apte à s'échapper du tuyau à travers chacun des orifices d'évacuation.

Chaque orifice d'évacuation 40 est plus particulièrement configuré pour autoriser le passage d'air vers l'extérieur du tuyau 4, tout en bloquant le passage du produit isolant en vrac vers l'extérieur dudit tuyau 4. En d'autres termes, l'orifice d'évacuation 40 permet l'évacuation d'une partie de l'air circulant dans l'espace 22 au sein du tuyau tout en canalisant le produit isolant au sein du tuyau 4 pour l'amener de la première portion d'extrémité 24 jusqu'à la deuxième portion d'extrémité 26. A cet effet, l'orifice d'évacuation peut présenter des dimensions appropriées permettant le blocage du produit isolant en vrac, ou bien être associé à un dispositif de filtration qui va être décrit ci-après.

En référence aux figures 3 et 4, les trous d'évacuation peuvent selon l'invention prendre différentes orientations. Chaque orifice d'évacuation 40 de chacun des tronçons percés 42 peut être défini par une forme cylindrique autour d'un axe d'allongement A, ou axe de révolution. Chaque orifice d'évacuation peut consister en un orifice droit, c'est-à-dire avec un axe d'allongement A qui est perpendiculaire à la direction longitudinale L du tuyau 4, tel qu'illustré sur la figure 3. Selon un autre exemple de l'invention illustré sur la figure 4, chaque orifice d'évacuation peut être incliné, c'est-à-dire qu'il s'étend dans la paroi cylindrique de telle sorte que son axe d'allongement A est incliné par rapport à la direction longitudinale du tuyau suivant un angle compris par exemple entre 10° et 80°. Par ailleurs, et toujours selon cet autre exemple de l'invention, au moins un orifice d'évacuation peut être incliné à contre-courant du flux d'air et de produit isolant en vrac. En d'autres termes, cet orifice d'évacuation s'étend, depuis l'intérieur du tuyau vers l'environnement extérieur, en direction de l'entrée du tuyau formée à l'extrémité libre de la première portion d'extrémité du tuyau. On tire avantage d'une telle configuration à contre-courant en ce qu'elle permet de limiter l'occlusion de l'orifice d'évacuation par le produit isolant en vrac lors de sa circulation dans l'espace du tuyau, ledit produit isolant circulant depuis la première portion d'extrémité vers la deuxième portion d'extrémité.

Indépendamment de l'orientation des orifices d'évacuation, chacun des orifices d'évacuation 40 peut présenter une troisième section de passage S3, prise dans un plan perpendiculaire à son axe d'allongement A, qui est inférieure ou égale à 5mm. Une telle dimension de la section de passage de l'orifice d'évacuation permet de limiter le passage du produit isolant en vrac au travers des orifices d'évacuation 40, des fibres dudit produit isolant en vrac présentant habituellement un diamètre supérieur à 5mm.

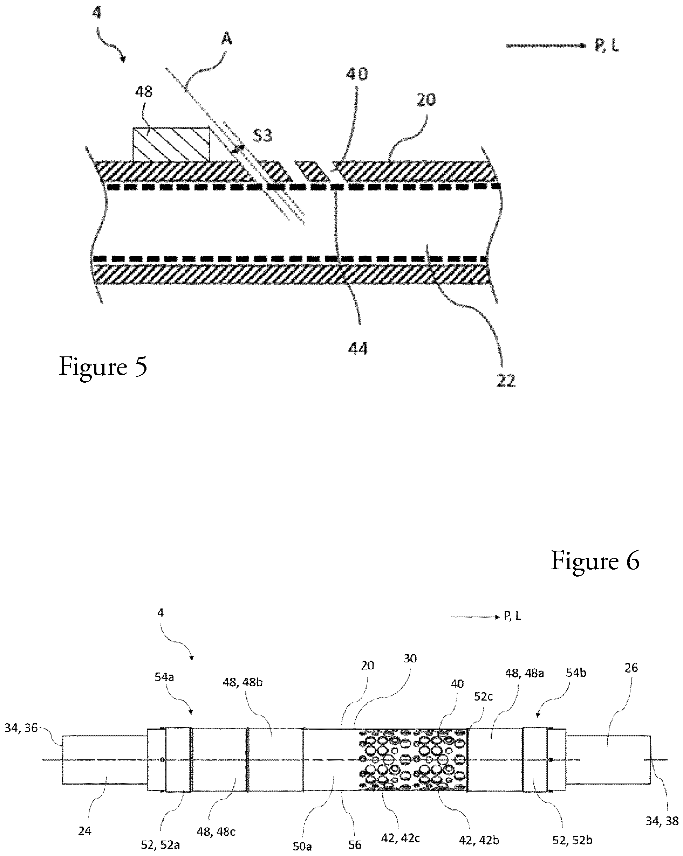

Tel que cela a été évoqué, et tel que cela est notamment visible sur les figures 4 et 5, un dispositif de filtration 44 peut être disposé en recouvrement de l'au moins un orifice d'évacuation 40 de chacun des tronçons percés 42. Le dispositif de filtration 44 peut être par exemple une grille comprenant une pluralité de trous 46 d'une section de passage T autorisant le passage d'air tout en bloquant le passage du produit isolant en vrac. A titre d'exemple, la section de passage T de chacun des trous peut être inférieure ou égale à 5mm. Dans l'exemple ici illustré, la grille est disposée de manière additionnelle à ce qui a été précédemment décrit sur la dimension des sections de passage S3 des orifices d'évacuation, mais il convient de noter que l'utilisation de la grille pourrait être indépendante en étant associé à des orifices d'évacuation de section de passage plus importante, la filtration du produit isolant en vrac n'étant alors assurée que par la grille.

Le dispositif de filtration 44 est disposé contre une face de la paroi cylindrique 20, en recouvrant l'intégralité de l'orifice d'évacuation. A cet effet, le dispositif de filtration 44 est réalisé dans un matériau flexible permettant de donner au dispositif de filtration une forme partiellement cylindrique de courbure identique à celle de la paroi cylindrique. Le dispositif de filtration est notamment disposé dans l'espace, au sein de la paroi cylindrique 20 définissant le tuyau 4. Un tel positionnement du dispositif de filtration, contre la face interne de la paroi cylindrique, permet notamment de ne pas former de saillie sur la face externe de la paroi cylindrique du tuyau, à l'extérieur de celui-ci, et donc de ne pas bloquer la translation d'un des moyens d'obturation 48.

Tel que visible aux figures 4 et 5, le dispositif de filtration 44 peut être disposé dans l'espace 22 tout le long de la paroi cylindrique 20 du tuyau 4, c'est-à-dire sur sensiblement toute la dimension longitudinale entre la première ouverture 24 formée à la première extrémité 26 du tuyau 4 et la deuxième ouverture 28 formée à la deuxième extrémité 30 du tuyau 4, de manière à former un manchon cylindrique dans l'espace 22 du tuyau 4. Un tel dimensionnement du dispositif de filtration 44 permet de s'assurer du bon recouvrement de chacun des orifices d'évacuation et de faciliter le positionnement et le maintien du dispositif de filtration 44 dans l'espace 22 du tuyau 4. Plus particulièrement, le dispositif de filtration s'étend tout le long de la face interne de cette paroi cylindrique 20,

Par ailleurs, un espacement peut être ménagé entre la paroi cylindrique 20 et le dispositif de filtration 44 de telle sorte que ces derniers ne sont pas en contact l'un de l'autre. Selon un exemple non limitatif de l'invention, l'espacement peut présenter une dimension, mesurée perpendiculairement à la face interne de la paroi cylindrique, comprise entre 2mm et 4mm.

Les moyens d'obturation 48 prennent ici chacun la forme d'un manchon apte à coulisser autour de la paroi cylindrique 20 du tuyau 4, et plus précisément autour du module 30. De manière plus précise, chaque moyen d'obturation est mobile en translation longitudinale le long du module 30 entre une première position de dégagement, qui est telle que les orifices d'évacuation ne sont pas recouverts par le moyen d'obturation correspondant et peuvent laisser passer l'air vers l'extérieur du tuyau, et une deuxième position de recouvrement, qui est telle que l'ensemble des orifices d'évacuation d'un tronçon percé est recouvert par le moyen d'obturation correspondant et que de l'air ne peut pas sortir du tuyau autrement que par la deuxième extrémité, avec le produit isolant en vrac.

En d'autres termes, chaque moyen d'obturation 48 est associé à un tronçon percé 42 et il est apte à recouvrir, dans une deuxième position de recouvrement, ou découvrir, dans une première position de dégagement, ce tronçon percé qui lui est spécifiquement associé, afin de bloquer ou autoriser le passage de l'air au travers de ce dernier. La translation du moyen d'obturation 48 peut notamment être contrôlé manuellement par un utilisateur de la machine de soufflage 1 ou encore via des moyens électroniques de commande à distance, ici non visibles.

Par ailleurs, chaque moyen d'obturation 48 peut être déplacé et maintenu en position dans une position intermédiaire entre la première position de dégagement et la deuxième position de recouvrement. En d'autres termes, chacun des moyens d'obturation 48 peut recouvrir partiellement le tronçon percé 42 auquel il est associé.

Dans ce contexte, on peut définir une dimension longitudinale DL de chacun des moyens d'obturation 48, visible à la figure 2 et prise le long de la direction longitudinale L du tuyau 4, la dimension longitudinale DL de chacun des moyens d'obturation 48 étant identique à chacune des dimensions d'extension DE des tronçons 28 évoquées précédemment.

On comprend de ce qui précède que chacun des moyens d'obturation 48 mobiles est apte à recouvrir l'intégralité du tronçon percé 42 qui lui est associé, en étant mobile en translation le long de la paroi cylindrique 20 du tuyau 4 suivant sa direction longitudinale L. Le module 30 comporte dans la pluralité de tronçons au moins deux tronçons de dégagement 50, distincts des tronçons percés 42 et dépourvus d'orifices d'évacuation. Plus précisément, on prévoit autant de tronçons de dégagement 50 qu'il est prévu de tronçons percés et de moyens d'obturation 48, chaque moyen d'obturation étant configuré pour se déplacer entre sa première position de dégagement dans laquelle il est en regard d'un tronçon de dégagement qui lui est dédié et sa deuxième position de recouvrement dans laquelle il est en regard d'un tronçon percé qui lui est dédié. Dans l'exemple illustré on définit un premier tronçon de dégagement 50a, un deuxième tronçon de dégagement 50b et un troisième tronçon de dégagement 50c, distincts des trois tronçons percés 42. On comprend par ailleurs que les caractéristiques des trois tronçons de dégagement 50 qui vont suivre s'appliquent *mutatis mutandis* à une configuration à deux tronçons de dégagement 50 et à plus de trois tronçons de dégagement 50.

Tel que cela vient d'être évoqué, chacun des trois moyens d'obturation 48 est apte à prendre une position de recouvrement en recouvrant intégralement l'un des tronçons percés 42, une position intermédiaire en recouvrant partiellement l'un des tronçons percés 42 et une position de dégagement en recouvrant intégralement l'un des tronçons de dégagement 50.

On va maintenant décrire plus en détails un premier mode de réalisation, en référence aux figures 2 à 8, dans lequel les tronçons percés 42, ici donc au nombre de trois, sont disposés l'un à la suite de l'autre suivant la direction longitudinale L du tuyau 4 et dans lequel les tronçons de dégagement 50, ici donc au nombre de trois, sont disposés l'un à la suite de l'autre suivant la direction longitudinale L du tuyau 4.

Dans l'exemple illustré, les trois tronçons percés 42 sont formés sur le module 30 de telle sorte qu'ils soient plus proches de la deuxième portion d'extrémité 26 de la paroi cylindrique 20 que de sa première portion d'extrémité 24. En d'autres termes, les orifices d'évacuation 40 sont plus proches de la sortie du mélange d'air et de produit isolant en vrac du tuyau 4 que de son entrée dans ledit tuyau 4, afin que la pression et le débit de circulation dans l'espace 22 du tuyau 4 restent suffisants pour amener le mélange depuis l'entrée jusqu'à la sortie du tuyau 4. On permet ainsi une évacuation efficace d'une partie de l'air circulant dans l'espace 22 du tuyau 4 tout en maintenant une projection suffisante du mélange en sortie de tuyau 4.

Dans ce contexte, et tel que cela est visible sur les figures, les trois tronçons de dégagement 50 sont formés sur le module 30 de telle sorte qu'ils soient plus proches de la première portion d'extrémité 24 du tuyau 4 que de la deuxième portion d'extrémité 26 par rapport à la direction longitudinale L et qu'ils soient ainsi disposés entre la première portion d'extrémité du tuyau et les tronçons percés 42.

Par ailleurs, l'agencement des tronçons percés 42 sur le module 30 est tel que le premier tronçon percé 42a est le plus proche de la deuxième portion d'extrémité 26 du tuyau 4, le troisième tronçon percé 42c étant le plus éloigné de cette deuxième portion d'extrémité 26, alors que l'agencement des tronçons de dégagement 50 sur le module 30 est tel que le troisième tronçon de dégagement 50c est le plus proche de la première portion d'extrémité 24, le premier tronçon de dégagement 50a étant le plus éloigné de la première portion d'extrémité 24. De la sorte, le premier tronçon de dégagement 50a est au voisinage du troisième tronçon percé 42c et ces deux tronçons sont dans l'exemple illustré adjacents.

Le tuyau comprend des organes de butée 52 en translation des moyens d'obturation 48 pour que ceux-ci puissent prendre une position appropriée en regard des tronçons percées ou des tronçons de dégagement. De manière plus précise, un premier organe de butée 52a est disposé à une première extrémité longitudinale 54a du module 30 en contact avec la première portion d'extrémité 24 du tuyau 4, et un deuxième organe de butée 52b est disposé à une deuxième extrémité longitudinale 54b du module 30 en contact de la deuxième portion d'extrémité 26 du tuyau 4. Selon un exemple de l'invention chacun du premier organe de butée 52a et du deuxième organe de butée 52b prend la forme d'un collet faisant saillie d'une surface externe 56 du module 30. En d'autres termes, chacun des organes de butée 52a, 52b forme une surépaisseur autour du module 30 à chacune de sa première extrémité longitudinale 54a et de sa deuxième extrémité longitudinale 54b, la surépaisseur bloquant la translation des moyens d'obturation 48 suivant la direction longitudinale L.

Dans cet agencement, les figures 2 et 6 illustrent plus particulièrement les positions possibles du premier moyen d'obturation 48a, mobile en translation entre une position de dégagement, visible sur la figure 2, dans laquelle il recouvre en intégralité le premier tronçon de dégagement 50a, et une position de recouvrement, visible sur la figure 6, dans laquelle il recouvre intégralement le premier tronçon percé 42a. Dans sa position de dégagement, le premier moyen d'obturation 48a est en butée contre les autres moyens d'obturation et il est voisin du troisième tronçon percé 42a, sans le recouvrir. Pour atteindre sa position de recouvrement, le premier moyen d'obturation 48a est translaté jusqu'au deuxième organe de butée 52b, agencé à une extrémité du module 30, et il recouvre dans cette position intégralement le premier tronçon percé 42a, en laissant découvert le deuxième tronçon percé 42b directement adjacent au premier tronçon percé.

Il est notable que dans ce premier mode de réalisation, ce premier moyen d'obturation 48a doit être bougé en premier lorsque l'ensemble des moyens d'obturation est au préalable dans une position de dégagement, puisque dans sa position de dégagement il est en butée contre les autres moyens d'obturation et plus particulièrement ici contre le deuxième moyen d'obturation 48b.

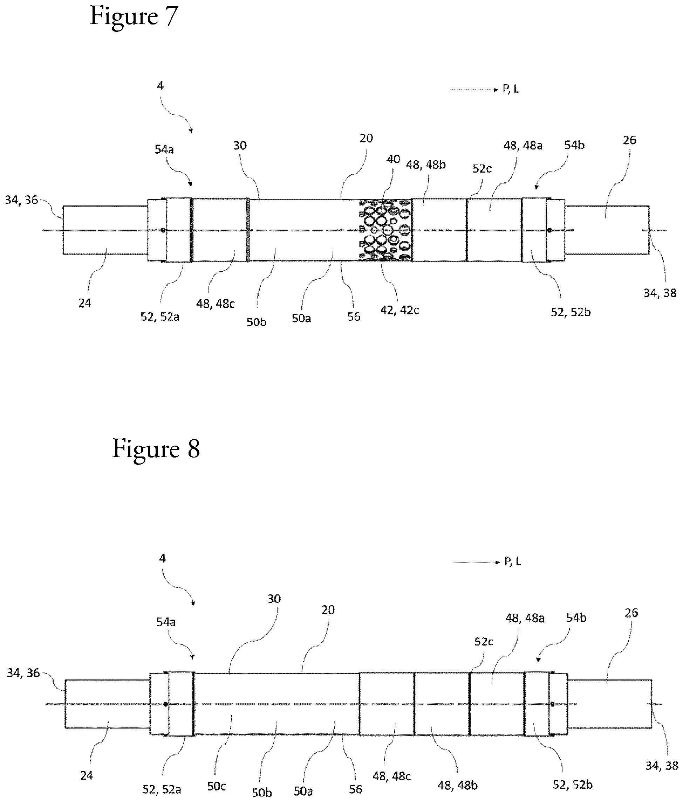

Le déplacement du deuxième moyen d'obturation 48b est rendu possible lorsque le premier moyen d'obturation 48a est en position de recouvrement, à distance des tronçons de dégagement, et qu'il n'est plus en butée contre les autres moyens d'obturation. Les figures 2 et 7 illustrent plus particulièrement les positions possibles de ce deuxième moyen d'obturation 48b, mobile en translation entre une position de dégagement, visible sur la figure 2, dans laquelle il recouvre en intégralité le deuxième tronçon de dégagement 50a, en butée contre le troisième moyen d'obturation, et une position de recouvrement, visible sur la figure 7, dans laquelle il recouvre intégralement le deuxième tronçon percé 42b. Pour atteindre sa position de recouvrement, le deuxième moyen d'obturation 48a est translaté jusqu'au premier moyen d'obturation déjà en place en recouvrement du premier tronçon percé 42a, ce premier moyen d'obturation formant un organe de butée intermédiaire permettant de s'assurer que le deuxième moyen d'obturation vienne recouvrir intégralement le deuxième tronçon percé 42b, tout en laissant découvert le troisième tronçon percé 42c directement adjacent au deuxième tronçon percé.

On tire avantage du fait que chacun des moyens d'obturation 48 présente une dimension longitudinale DL identique à la dimension d'extension DE de son tronçon percé associé, en ce que cela permet aux moyens d'obturation 48 déjà en position de recouvrement de former une butée longitudinale pour un moyen d'obturation 48 adjacent venant prendre une telle position de recouvrement. Ainsi, tel qu'illustré sur la figure 7, le premier moyen d'obturation 48a positionné en recouvrement du premier tronçon percé 42a forme un organe de butée intermédiaire 52c pour le deuxième moyen d'obturation 48b lorsque celui-ci coulisse longitudinalement depuis le deuxième tronçon de dégagement 50b vers le deuxième tronçon percé 42b, et il en est de même sur la figure 8 entre le deuxième moyen d'obturation 48b et le troisième moyen d'obturation 48c, lorsque le deuxième moyen d'obturation 48b est déjà positionné en recouvrement du deuxième tronçon percé et forme un organe de butée intermédiaire pour le troisième moyen d'obturation 48c lorsque celui-ci coulisse longitudinalement depuis le troisième tronçon de dégagement 50c vers le troisième tronçon percé 42c.

Il résulte de ce qui précède que le mouvement des moyens d'obturation ne peut se faire que dans un ordre précis, selon que l'on souhaite déplacer les moyens d'obturation d'une position de recouvrement à une position de dégagement ou inversement. A titre d'exemple, le deuxième moyen d'obturation 48b ne peut être déplacé que si le premier moyen d'obturation 48a et/ou le troisième moyen d'obturation 48c sont dans des positions qui autorisent le déplacement du deuxième moyen d'obturation.

Chacun des tronçons percés 42 peut comprendre une pluralité d'orifices d'évacuation 40. Plus particulièrement dans le premier mode de réalisation de l'invention illustré sur les figures 2 à 8, les tronçons percés 42 comprennent un nombre, un dimensionnement et une répartition des orifices d'évacuation 40 qui sont identiques d'un tronçon percé 42 à l'autre. En d'autres termes, les orifices d'évacuation 40 de chacun des tronçons percés 42 forment un motif identique d'un tronçon percé 42 à l'autre.

A titre d'exemple, au moins deux orifices d'évacuation 40 d'un tronçon percé 42 peuvent présenter des sections de passage S3 différentes, dès lors que celles-ci restent égales ou inférieures à une valeur de 5mm tel que précédemment décrit, et/ou dès lors que les orifices d'évacuation sont recouverts, notamment en regard d'une face interne de la paroi cylindrique, d'un dispositif de filtration tel qu'évoqué précédemment. Une telle configuration avec des orifices d'évacuation aux sections de passage différentes peut notamment être couplée avec la possibilité d'avoir des positions intermédiaires du moyen d'obturation 48, afin de créer un grand nombre de paliers de passage d'air différents les uns des autres.

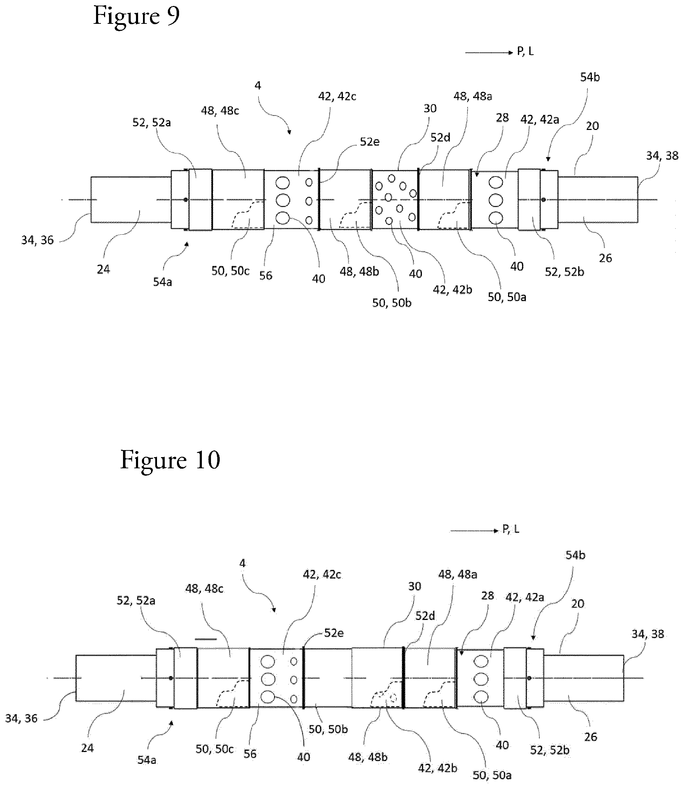

Un deuxième mode de réalisation de l'invention va maintenant être décrit en rapport avec les figures 9 et 10. Il convient de considérer que l'ensemble des caractéristiques structurelles et fonctionnelles du tuyau 4 décrites dans le premier mode de réalisation s'appliquent *mutatis mutandis* au deuxième mode de réalisation et que seules les caractéristiques distinctes du premier mode de réalisation feront l'objet d'une description. Pour les caractéristiques communes il convient donc de se rapporter au premier mode de réalisation.

Dans ce deuxième mode de réalisation du tuyau 4, chacun des tronçons percés 42, là encore pour l'exemple au nombre de trois, est disposé en alternance avec chacun des tronçons de dégagement 50 suivant la direction longitudinale L du tuyau 4. Ainsi, le module 30 comprend depuis sa deuxième extrémité longitudinale 54b vers sa première extrémité longitudinale 54a, le premier tronçon percé 42a, le premier tronçon de dégagement 50a, le deuxième tronçon percé 42b, le deuxième tronçon de dégagement 50b, le troisième tronçon percé 42c et le troisième tronçon de dégagement 50c. Le tronçon de dégagement associé à un tronçon percé est ainsi directement adjacent à celui-ci et le moyen d'obturation destiné à se déplacer en translation entre une position en regard de ce tronçon de dégagement et une position en regard de ce tronçon percé a ainsi moins de distance à effectuer pour passer d'une position à l'autre.

Contrairement à ce qui a pu être décrit pour le premier exemple de réalisation, les moyens d'obturation ne peuvent dès lors pas servir de butée au positionnement d'un autre moyen d'obturation, puisque chaque moyen d'obturation peut être manipulé indépendamment des autres. Ainsi, selon ce deuxième mode de réalisation de l'invention, chaque ensemble formé par un des tronçons percés 42 et un des tronçons de dégagement 50 est encadré par deux organes de butée 52. De manière plus précise, le module comprend le premier organe de butée 52a et le deuxième organe de butée 52b respectivement à sa première extrémité longitudinale 54a et sa deuxième extrémité longitudinale 54b, et comprend également un troisième organe de butée 52d entre le premier tronçon de dégagement 50a et le deuxième tronçon percé 42b, ainsi qu'un quatrième organe de butée 52e entre le deuxième tronçon de dégagement 50b et le troisième tronçon percé 42c. Le troisième organe de butée 52d et le quatrième organe de butée 52e peuvent prendre la forme par exemple d'un taquet faisant saillie de la surface externe 56 du module 30 ou encore d'une bague enserrant ledit module 30.

De la sorte, le premier moyen d'obturation 48a est apte à translater entre une position de dégagement, visible sur la figure 9 et dans laquelle il est contre une première face du troisième organe de butée 52d et en regard du premier tronçon de dégagement 50a, et une position de recouvrement, non illustrée ici et dans laquelle il est contre une face du deuxième organe de butée 52b et en regard du premier tronçon percé 42a.

De manière analogue, le troisième moyen d'obturation 48c est apte à translater entre une position de dégagement, visible sur la figure 9 et dans laquelle il est contre une face du premier organe de butée 52a et en regard du troisième tronçon de dégagement 50c, et une position de recouvrement, non illustrée ici et dans laquelle il est contre une face du quatrième organe de butée 52e et en regard du troisième tronçon percé 42c.

Le deuxième moyen d'obturation est apte à se déplacer de manière analogue et la figure 10 illustre la position de recouvrement de ce deuxième moyen d'obturation, dans laquelle il est contre une deuxième face du troisième organe de butée 52d pour être en regard du deuxième tronçon percé 42b. Il convient de noter que dans ce deuxième mode de réalisation, le deuxième moyen d'obturation a pu être déplacé sans que soient déplacés les deux autres moyens d'obturation.

Tel que cela est visible sur la figure 5, chacun des tronçons percés 42 comprend une pluralité d'orifices d'évacuation 40 présentant chacun une répartition sur le module 30 différente d'un tronçon percé 42 à l'autre. En d'autres termes, les orifices d'évacuation 40 d'un tronçon percé 42 peuvent présenter un nombre différent, et des sections de passage différentes, par rapport à un tronçon percé voisin. Il en résulte que quantité d'air pouvant sortir du tuyau est différente d'un tronçon percé à l'autre, et que l'impact du recouvrement d'un tronçon percé par un moyen d'obturation sur le débit du mélange circulant dans le tuyau est différent selon le tronçon percé que l'utilisateur décide d'obturer.

On tire avantage du tuyau tel qu'il vient d'être décrit en ce qu'il permet par des moyens simples, à savoir les tronçons percés et les moyens d'obturation mobiles, de proposer une opération de soufflage de produit isolant en vrac qui puisse s'adapter à des environnements confinés dans lesquels le produit isolant en vrac doit être déposé en évitant de soulever trop de poussière lors de la projection et/ou qui puisse proposer des isolations dans lesquelles le produit isolant en vrac n'est pas trop compacté sous l'effet d'une pression d'air trop importante.

## Revendications

1. Tuyau (4) de transport d'un produit d'isolation en vrac pour une machine de soufflage (1) du produit isolant, le tuyau (4) s'étendant suivant une direction d'allongement principal (P) longitudinale (L) et comprenant au moins une paroi cylindrique (20) qui délimite un espace (22) configuré pour la circulation au moins du produit isolant en vrac, la paroi cylindrique (20) comprenant au moins une première portion d'extrémité (24) et une deuxième portion d'extrémité (26) opposées l'une de l'autre suivant la direction longitudinale (L), le tuyau (4) étant **caractérisé en ce que** la paroi cylindrique (20) comprend une pluralité de tronçons (28) entre sa première portion d'extrémité (24) et sa deuxième portion d'extrémité (26), au moins deux des tronçons (28) comprenant chacun au moins un orifice d'évacuation (40) de manière à former au moins deux tronçons percés (42), le tuyau (4) comprenant au moins deux moyens d'obturation (48) mobiles en translation suivant la direction longitudinale (L) autour de la paroi cylindrique (20), chacun des moyens d'obturation (48) étant apte à recouvrir spécifiquement un des tronçons percés (42).

2. Tuyau (4) de transport selon la revendication précédente, dans lequel au moins deux des tronçons (28) sont des tronçons de dégagement (50) distincts des tronçons percés (42), chaque moyen d'obturation (48) étant apte à prendre une position de recouvrement dans laquelle il est en regard d'un des tronçons percés (42) et une position de dégagement dans laquelle il est en regard d'un des tronçons de dégagement (50).

3. Tuyau (4) de transport selon la revendication précédente, dans lequel les au moins deux tronçons percés (42) sont disposés l'un à la suite de l'autre suivant la direction longitudinale (L) du tuyau (4), les au moins deux tronçons de dégagement (50) étant disposés l'un à la suite de l'autre suivant la direction longitudinale (L) du tuyau (4).

4. Tuyau (4) de transport selon la revendication 2, dans lequel les tronçons percés (42) sont disposés en alternance avec les tronçons de dégagement (50), suivant la direction longitudinale (L) du tuyau (4).

5. Tuyau (4) de transport selon l'une quelconque des revendications précédentes, dans lequel la pluralité de tronçons (28) est formée sur un module (30) de la paroi cylindrique (20) qui est agencé entre la première portion d'extrémité (24) et la deuxième portion d'extrémité (26) de la paroi cylindrique (20) du tuyau (4).

6. Tuyau (4) de transport selon la revendication précédente, dans lequel le module (30) comprend des organes de butée (52) en translation des moyens d'obturation (48).

7. Tuyau (4) de transport selon l'une quelconque des revendications précédentes, dans lequel l'au moins un orifice d'évacuation (40) de chacun des au moins deux tronçons percés (42) est débouchant sur l'espace (22) du tuyau (4) et sur un environnement extérieur audit tuyau (4).

8. Tuyau (4) de transport selon l'une quelconque des revendications précédentes, dans lequel l'au moins un orifice d'évacuation (40) de chacun des au moins deux tronçons percés (42) présente une section de passage (S3) inférieure ou égale à 5mm.

9. Tuyau (4) de transport selon l'une quelconque des revendications précédentes, dans lequel un dispositif de filtration (44) est disposé en recouvrement de chacun des au moins un orifice d'évacuation (40) de chacun des au moins deux tronçons percés (42).

10. Tuyau (4) de transport selon l'une quelconque des revendications précédentes, dans lequel chacun des tronçons (28) s'étend entre la première portion d'extrémité (24) et la deuxième portion d'extrémité (26) suivant une dimension d'extension (DE) prise le long de la direction longitudinale (L) du tuyau (4), les dimensions d'extension (DE) de chacun des tronçons (28) étant identiques les unes des autres et les moyens d'obturation (48) présentant chacun une dimension longitudinale (DL) prise le long de la direction longitudinale (L) du tuyau (4) identique à chacune des dimensions d'extension (DE) des tronçons (28).

11. Tuyau (4) de transport selon l'une quelconque des revendications précédentes, dans lequel chacun des tronçons percés (42) comprend une pluralité d'orifices d'évacuation (40) dont la répartition sur la paroi cylindrique (20) forme un motif, les motifs formés étant identiques d'un tronçon percé (42) à l'autre.

12. Tuyau (4) de transport selon l'une quelconque des revendications 1 à 10, dans lequel chacun des tronçons percés (42) comprend une pluralité d'orifices d'évacuation (40) dont la répartition sur la paroi cylindrique (20) forme un motif, les motifs formés étant différents d'un tronçon percé (42) à l'autre.

13. Tuyau (4) de transport selon l'une quelconque des revendications 11 ou 12, dans lequel la pluralité d'orifices d'évacuation (40) de chacun des tronçons percés (42) comprend au moins deux orifices d'évacuation (40) présentant des sections passage (S3) distinctes.

14. Tuyau (4) de transport selon l'une quelconque des revendications précédentes, dans lequel le moyen d'obturation (48) est un manchon coulissant longitudinalement autour de la paroi cylindrique (20) du tuyau (4).

15. Machine de soufflage (1) d'un produit isolant en vrac comprenant au moins une base (2) et un tuyau (4) de transport du produit isolant suivant l'une quelconque des revendications précédentes, la base (2) comprenant au moins une entrée d'air (6) et une entrée du produit isolant (8) en vrac, lesdites entrées (6, 8) étant reliées au tuyau (4) au moyen respectivement d'un canal de circulation d'air (10) et d'un canal de circulation du produit isolant (12) en vrac.

16. Procédé d'isolation d'une zone à isoler dans lequel un produit isolant en vrac est soufflé par une machine de soufflage (1) selon la revendication précédente, procédé au cours duquel un utilisateur est apte à déplacer en translation longitudinale (L) au moins un des moyens d'obturation (48) pour évacuer une quantité donnée d'air entre la base (2) et la deuxième portion d'extrémité (26) du tuyau.

## Patentansprüche

1. Rohr (4) zum Transport eines Dämmstoffs in loser Schüttung für eine Einblasmaschine (1) des Dämmstoffs, wobei das Rohr (4) in einer Haupterstreckungsrichtung (P) in Längsrichtung (L) erstreckt und mindestens eine zylindrische Wand (20) umfasst, der einen Raum (22) begrenzt, der für die Zirkulation mindestens des Dämmstoffs in loser Schüttung ausgelegt ist, wobei die zylindrische Wand (20) mindestens einen ersten Endabschnitt (24) und einen zweiten Endabschnitt (26) aufweist, die einander in Längsrichtung (L) gegenüberliegen, wobei das Rohr (4) **dadurch gekennzeichnet ist, dass** die zylindrische Wand (20) zwischen ihrem ersten Endabschnitt (24) und ihrem zweiten Endabschnitt (26) mehrere Abschnitte (28) aufweist, wobei mindestens zwei der Abschnitte (28) jeweils mindestens eine Evakuierungsöffnung (40) umfassen, um mindestens zwei durchbohrten Abschnitte (42) zu bilden, wobei das Rohr (4) mindestens zwei Verschlussmittel (48) umfasst, die in der Längsrichtung (L) um die zylindrische Wand (20) herum translatorisch beweglich sind, wobei jedes der Verschlussmittel (48) spezifisch einen der durchbohrten Abschnitte (42) abdecken kann.

2. Transportrohr (4) nach dem vorhergehenden Anspruch, wobei mindestens zwei der Abschnitte (28) von den durchbohrten Abschnitten (42) verschiedene Freiraumabschnitte (50) sind, wobei jedes Verschlussmittel (48) eine Abdeckposition einnehmen kann in der es einem der durchbohrten Abschnitte (42) gegenüber ist, und einer Freigabeposition, in der es einem der Freiraumabschnitte (50) gegenüber ist.

3. Transportrohr (4) nach dem vorhergehenden Anspruch, wobei die mindestens zwei durchbohrten Abschnitte (42) in Längsrichtung (L) des Rohrs (4) nacheinander angeordnet sind, wobei die mindestens zwei Freiraumabschnitte (50) in Längsrichtung (L) des Rohres (4) nacheinander angeordnet sind.

4. Transportrohr (4) nach Anspruch 2, wobei die durchbohrten Abschnitte (42) abwechselnd mit den Freiraumabschnitten (50) in Längsrichtung (L) des Rohrs (4) angeordnet sind.

5. Transportrohr (4) nach einem der vorhergehenden Ansprüche, wobei die mehreren Abschnitte (28) an einem Modul (30) der zylindrischen Wand (20) ausgebildet sind, wobei das Modul (30) zwischen dem ersten Endabschnitt (24) und dem zweiten Endabschnitt (26) der zylindrischen Wand (20) des Rohrs (4) angeordnet ist.

6. Transportrohr (4) nach dem vorhergehenden Anspruch, wobei das Modul (30) Anschlagelemente (52) zur Translation der Verschlussmittel (48) umfasst.

7. Transportrohr (4) nach einem der vorhergehenden Ansprüche, wobei die mindestens eine Evakuierungsöffnung (40) jedes der mindestens zwei durchbohrten Abschnitte (42) in den Raum (22) des Rohrs (4) und auf einer Umgebung außerhalb des Rohrs (4) mündet.

8. Transportrohr (4) nach einem der vorhergehenden Ansprüche, wobei die mindestens eine Evakuierungsöffnung (40) jedes der mindestens zwei durchbohrten Abschnitte (42) einen Durchlassquerschnitt (S3) von kleiner oder gleich 5 mm umfasst.

9. Transportrohr (4) nach einem der vorhergehenden Ansprüche, wobei eine Filtervorrichtung (44) angeordnet ist, die jede der mindestens einen Evakuierungsöffnung (40) jedes der mindestens zwei durchbohrten Abschnitte (42) abdeckt.

10. Transportrohr (4) nach einem der vorhergehenden Ansprüche, wobei sich jeder der Abschnitte (28) zwischen dem ersten Endabschnitt (24) und dem zweiten Endabschnitt (26) entlang einer Erstreckungsdimension (DE) erstreckt, die entlang der Längsrichtung (L) des Rohrs (4) genommen wird, wobei die Erstreckungsdimensionen (DE) jedes der Abschnitte (28) untereinander identisch sind und die Verschlussmittel (48) jeweils eine Längsdimension (DL) umfassen, die entlang der Längsrichtung (L) des Rohres (4) genommen wird und mit jeder Erstreckungsdimension (DE) der Abschnitte (28) identisch ist.

11. Transportrohr (4) nach einem der vorhergehenden Ansprüche, wobei jeder der durchbohrten Abschnitte (42) eine Vielzahl von Evakuierungsöffnungen (40) umfasst, deren Verteilung auf der zylindrischen Wand (20) ein Muster bildet, wobei die gebildeten Muster von einem durchbohrten Abschnitt (42) zum anderen identisch sind.

12. Transportrohr (4) nach einem der Ansprüche 1 bis 10, wobei jeder der durchbohrten Abschnitte (42) eine Vielzahl von Evakuierungsöffnungen (40) umfasst, deren Verteilung auf der zylindrischen Wand (20) ein Muster bildet, wobei die gebildeten Muster von einem durchbohrten Abschnitt (42) zum anderen unterschiedlich sind.

13. Transportrohr (4) nach einem der Ansprüche 11 oder 12, wobei die Vielzahl von Evakuierungsöffnungen (40) jedes der durchbohrten Abschnitte (42) mindestens zwei Evakuierungsöffnungen (40) mit separaten Durchlassquerschnitt (S3) umfasst.

14. Transportrohr (4) nach einem der vorhergehenden Ansprüche, wobei das Verschlussmittel (48) eine Hülse ist, die in Längsrichtung um die zylindrische Wand (20) des Rohrs (4) gleitet.

15. Einblasmaschine (1) eines Dämmstoffs in loser Schüttung, umfassend mindestens eine Basis (2) und ein Rohr (4) zum Transport des Dämmstoffs nach einem der vorhergehenden Ansprüche, wobei die Basis (2) mindestens einen Lufteinlass (6) umfasst und einen Einlass für das Dämmstoffs in loser Schüttung (8), wobei die Einlässe (6, 8) über einen Luftzirkulationskanal (10) bzw. einen Zirkulationskanal für das Dämmstoffs in loser Schüttung mit dem Rohr (4) verbunden sind (12).

16. Verfahren zur Isolierung eines zu isolierenden Bereichs, wobei ein Dämmstoffs in loser Schüttung durch eine Einblasmaschine (1) nach dem vorhergehenden Anspruch eingeblasen wird, wobei ein Benutzer in der Lage ist, mindestens einen der Verschlussmittel (48) in Längsrichtung (L) zu verschieben, um einer bestimmten Luftmenge zwischen der Basis (2) und dem zweiten Endabschnitt (26) des Rohrs abzulassen.

## Claims

1. A pipe (4) for the transport of a loose-fill insulation product for a blowing machine (1) for blowing the insulating product, the pipe (4) extending along a longitudinal (L) main elongation direction (P) and comprising at least one cylindrical wall (20) which delimits a space (22) configured for the circulation at least of the loose-fill insulation product, the cylindrical wall (20) comprising at least a first end portion (24) and a second end portion (26) that are opposite ends from one another along the longitudinal direction (L), the pipe (4) being **characterized in that** the cylindrical wall (20) comprises a plurality of sections (28) between its first end portion (24) and its second end portion (26), at least two of the sections (28) each comprising at least one evacuation orifice (40) so as to form at least two perforated sections (42), the pipe (4) comprising at least two obturating means (48) that are movable in translation along the longitudinal direction (L) around the cylindrical wall (20), each of the obturating means (48) being able to cover specifically one of the perforated sections (42).

2. The transport pipe (4) as claimed in the preceding claim, wherein at least two of the sections (28) are clearing sections (50) separate from the perforated sections (42), each obturating means (48) being able to take up a covering position in which it is next to one of the perforated sections (42) and a clearing position in which it is next to one of the clearing sections (50).

3. The transport pipe (4) as claimed in the preceding claim, wherein the at least two perforated sections (42) are disposed one after the other along the longitudinal direction (L) of the pipe (4), the at least two clearing sections (50) being disposed one after the other along the longitudinal direction (L) of the pipe (4).

4. The transport pipe (4) as claimed in claim 2, wherein the perforated sections (42) are disposed in a manner alternating with the clearing sections (50), along the longitudinal direction (L) of the pipe (4).

5. The transport pipe (4) as claimed in any of the preceding claims, wherein the plurality of sections (28) is formed on a module (30) of the cylindrical wall (20) which is arranged between the first end portion (24) and the second end portion (26) of the cylindrical wall (20) of the pipe (4).

6. The transport pipe (4) as claimed in the preceding claim, wherein the module (30) comprises stop members (52) for stopping the movement in translation of the obturating means (48).

7. The transport pipe (4) as claimed in any of the preceding claims, wherein the at least one evacuation orifice (40) of each of the at least two perforated sections (42) opens onto the space (22) of the pipe (4) and onto an exterior environment of said pipe (4).

8. The transport pipe (4) as claimed in any of the preceding claims, wherein the at least one evacuation orifice (40) of each of the at least two perforated sections (42) has a passage cross section (S3) smaller than or equal to 5 mm.

9. The transport pipe (4) as claimed in any of the preceding claims, wherein a filtration device (44) is disposed so as to cover each of the at least one evacuation orifice (40) of each of the at least two perforated sections (42).

10. The transport pipe (4) as claimed in any of the preceding claims, wherein each of the sections (28) extends between the first end portion (24) and the second end portion (26) along an extension dimension (DE) measured along the longitudinal direction (L) of the pipe (4), the extension dimensions (DE) of each of the sections (28) being identical to one another and the obturating means (48) each having a longitudinal dimension (DL) measured along the longitudinal direction (L) of the pipe (4) that is identical to each of the extension dimensions (De) of the sections (28).

11. The transport pipe (4) as claimed in any of the preceding claims, wherein each of the perforated sections (42) comprises a plurality of evacuation orifices (40), the distribution of which over the cylindrical wall (20) forms a pattern, the patterns formed being identical from one perforated section (42) to the other.

12. The transport pipe (4) as claimed in any of the claims 1 to 10, wherein each of the perforated sections (42) comprises a plurality of evacuation orifices (40), the distribution of which over the cylindrical wall (20) forms a pattern, the patterns formed being different from one perforated section (42) to the other.

13. The transport pipe (4) as claimed in either one of claims 11 and 12, wherein the plurality of evacuation orifices in each of the perforated sections comprises at least two evacuation orifices having different passage cross sections.

14. The transport pipe (4) as claimed in any of the preceding claims, wherein the obturating means (48) is a sleeve that slides longitudinally around the cylindrical wall (20) of the pipe (4).

15. A blowing machine (1) for blowing a loose-fill insulating product, comprising at least a base (2) and a pipe (4) for transporting the insulating product as claimed in any of the preceding claims, the base (2) comprising at least an air inlet (6) and an inlet for the loose-fill insulating product (8), said inlets (6, 8) being connected to the pipe (4) by means of an air circulation channel (10) and a circulation channel for the loose-fill insulating product (12), respectively.

16. A method for insulating a zone to be insulated, wherein a loose-fill insulating product is blown by a blowing machine (1) as claimed in the preceding claim, during which method a user is able to move at least one of the obturating means (48) in longitudinal (L) translation in order to evacuate a given quantity of air between the base (2) and the second end portion (26) of the pipe.
